# EUROPÄISCHE PATENTSCHRIFT

(11) **EP 2 522 579 B1**
(45) Veröffentlichungstag und Bekanntmachung des Hinweises auf die Patenterteilung: **26.08.2015**
(21) Anmeldenummer: 12166511.1
(22) Anmeldetag: 03.05.2012
(51) Int. Cl.: B65B 9/02, B65B 51/30, B65B 61/10

(54) **Verpackungsmaschine und Verfahren zum Verpacken von Gegenständen**
Packaging machine and method for packaging objects
Machine d'emballage et procédé destinés à emballer des objets

(30) Priorität: 09.05.2011 DE 102011075532
(43) Veröffentlichungstag der Anmeldung: 14.11.2012
(73) Patentinhaber: Kallfass Verpackungsmaschinen GmbH, 72622 Nürtingen-Zizishausen (DE)
(72) Erfinder: Kallfass, Jens, 72622 Nürtingen (DE); Kraut, Tino, 72669 Unterensingen (DE); Kächele, Klaus, 72584 Hülben (DE); Krügel, Georg, 73266 Bissingen (DE)
(74) Vertreter: Patentanwälte Ruff, Wilhelm, Beier, Dauster & Partner

(56) Entgegenhaltungen:
- DE-A1-102009 060 342
- US-A- 4 063 400
- US-A- 4 858 416
- US-B1- 6 662 527

## Beschreibung

Die Erfindung betrifft eine Verpackungsmaschine zum Verpacken von Gegenständen sowie ein entsprechendes Verfahren.

Aus dem Stand der Technik, beispielsweise der DE 203 04 333 U1, sind Verpackungsmaschinen bekannt, mit denen Gegenstände in einen Folienschlauch verpackt werden. Eine dabei verwendete Verschlusseinrichtung zum Verschließen und Durchtrennen des Folienschlauches weist einen Oberstempel oberhalb des Folienschlauchs und einen Unterstempel unterhalb davon auf. Diese werden gleichzeitig und gegensinnig aufeinander zu bewegt, um in einem Schritt den Folienschlauch zu verschweißen und zu durchtrennen. Da die Gegenstände üblicherweise auf einem Zuführband herangeführt und auf einem separaten Abführband abgeführt werden, wird eine Bandlücke zwischen den beiden Bändern an der Verschlusseinrichtung benötigt, damit die beiden Stempel durch diese hindurch aufeinander treffen können.

Aus der US 6,662,527 ist eine Verpackungsmaschine bekannt mit einer Verschlusseinrichtung mit Oberstempel und Unterstempel, die an einer Schiene in Verpackungsrichtung bewegbar ist. Endrollen eines Bandes vor und eines Bandes hinter der Verschlusseinrichtung sind an einem Rahmen der Verschlusseinrichtung befestigt und werden mit dieser entlang der Transportrichtung bewegt, sodass Oberstempel und Unterstempel stets in einer Bandlücke zwischen diesen Endrollen aufeinandertreffen zum Verschweißen und zum Durchtrennen der Bahnen von Verpackungsmaterial.

Aus der US 4,858,416 ist eine Verpackungsmaschine bekannt mit sogenannten Seitenschweißeinrichtungen. Dabei werden mittels umlaufender Räder oder Bänder die Seitenbereiche einer unteren und einer oberen Bahn von Verpackungsfolie, die zwischen sich zu verpackende Gegenstände aufweisen, miteinander verschweißt und ein Überstand abgetrennt. Dieses Verschweißen und Abtrennen an der Seite der zu verpackenden Gegenstände erfolgt kontinuierlich.

Aus der US 4,063,400 ist eine Verpackungsmaschine bekannt mit einer vorgenannten Verschlusseinrichtung mit Oberstempel und Unterstempel. Durch eine Verstelleinrichtung kann der Abstand von Oberstempel und Unterstempel zu einer Ebene der Trennung für die zu verpackenden Gegenstände eingestellt werden.

### Aufgabe und Lösung

Der Erfindung liegt die Aufgabe zugrunde, eine eingangs genannte Verpackungsmaschine zum Verpacken von Gegenständen in einen Folienbeutel sowie ein entsprechendes Verfahren zu schaffen, mit denen Probleme des Standes der Technik gelöst werden können und insbesondere Gegenstände schnell, praxistaugüch und eng in einen Folienbeutel verpackt werden können, wobei besonders vorteilhaft möglichst wenig Folienabfall anfällt.

Gelöst wird diese Aufgabe durch eine Verpackungsmaschine mit den Merkmalen des Anspruchs 1 sowie ein Verfahren zum Verpacken von Gegenständen mit den Merkmalen des Anspruchs 12. Vorteithafte sowie bevorzugte Ausgestaltungen der Erfindung sind Gegenstand der weiteren Ansprüche und werden im Folgenden näher erläutert. Dabei werden manche der Merkmale nur für die Verpackungsmaschine oder nur für das Verfahren beschrieben. Sie sollen jedoch unabhängig davon sowohl für die Verpackungsmaschine als auch für das Verfahren gelten können. Der Wortlaut der Ansprüche wird durch ausdrückliche Bezugnahme zum Inhalt der Beschreibung gemacht.

Bei der Verpackungsmaschine ist erfindungsgemäß vorgesehen, dass der Folienbeutel zuerst als Folienschlauch aus einer oberen Folienlage und einer separat davon zugeführten unteren Folienlage besteht bzw. hergestellt ist, wobei die Folienlagen vorteilhaft quasi endlos sind bzw. von Rollen abgewickelt werden. Jeweils an beiden Seiten der Folienlagen ist eine Seitenschweißeinrichtung angeordnet, die die beiden Folienlagen miteinander zu dem Folienschlauch verbindet. Des Weiteren ist eine Verschlusseinrichtung vorgesehen, um die Folienbeutel einzeln abzutrennen und einzeln zu verschießen. Die Verpackungsmaschine weist eine Zuführung und ein Abführung für zu verpackende Gegenstände auf, die aneinander anschließen und dabei durch eine Lücke getrennt sind. Die genannte Verschlusseinrichtung ist an der Lücke angeordnet und weist einen Oberstempel oberhalb der Lücke auf und einen Unterstempel unterhalb davon. Oberstempel und Unterstempel sind mechanisch miteinander gekoppelt für eine gleichzeitige und gegensinnige Bewegung.

Erfindungsgemäß ist die Verschlusseinrichtung bewegbar entlang der Transportrichtung der Gegenstände zum Verschließen des Folienschlauches bei kontinuierlich durchlaufenden Gegenständen synchron mit deren Bewegung. Dabei wird die Lücke mitbewegt zumindest für einen kurzen Weg zum Aufbeschleunigen bzw. Aufsynchronisieren auf die zu verpackenden Gegenstände. Dadurch braucht für die vertikale Bewegung der Stempel der Verschlusseinrichtung der Durchlauf des Folienschlauchs mit den Gegenständen darin nicht gestoppt zu werden, was eben einen erheblichen Zeitgewinn bzw. ein schnelleres Verpacken ermöglicht. Dazu ist die Verschlusseinrichtung an einem horizontal bewegbaren Schlitten angeordnet, wobei mindestens eine der vorgenannten Ausgleichseinrichtungen mit dem Schlitten verbunden bzw. gekoppelt ist für eine gleichsinnige Bewegung. Gleichzeitig mit der Verschlusseinrichtung wird auch die Bandlücke verschoben bzw. mitbewegt. Diese Bewegung kann mit oder ohne Öffnung der Bandlücke sein. Ganz zu Beginn der Bewegung erfolgt vorteilhaft noch keine Öffnung, diese kann dann abhängig von einer Bewegung von Schweißstempeln der Verschlusseinrichtung etwas später einsetzen.

So ist es also zum einen möglich, die Arbeitsgeschwindigkeit einer Verpackungsmaschine zu erhöhen, da der Transport des Folienschlauchs bzw. der Gegenstände für den kurzen Zeitraum der Dauer des Verschweißens durch Oberstempel und Unterstempel der Verschlusseinrichtung nicht gestoppt werden muss. Problematisch dabei sind nämlich in der Praxis nicht nur die reinen Stoppzeiten, sondern auch die Dauer für das Abbremsen sowie das Beschleunigen, insbesondere der bewegten Massen sowohl der zu verpackenden Gegenstände als auch der Bänder selbst.

Des weiteren wird so die Verschlusseinrichtung kurzzeitig auf Geschwindigkeit des Folienschlauchs gebracht und läuft ein kurzes Stück mit, so dass relativ zueinander keine Bewegung stattfindet. Deswegen können die beiden Stempel problemlos die Folienlagen bzw. den Folienschlauch quer verschweißen bzw. verschließen und durchtrennen. Hierfür reicht in der Praxis ein Weg von einigen Zentimetern, beispielsweise 5 cm bis 100 cm oder sogar nur 10 cm bis 40 cm.

In vorteilhafter weiterer Ausgestaltung der Erfindung ist es möglich, dass an der Verschlusseinrichtung der Abstand von Oberstempel und Unterstempel zueinander bzw. zu der Lücke einstellbar ist. Dies sollte derart ausgebildet sein, dass er gleichzeitig bzw. synchron einstellbar ist, dass also die beiden Stempel ihren Abstand von dem gewünschten Punkt des Aufeinandertreffens jeweils in gleichem Maß bzw. gleichartig verändern. Dies ist beispielsweise durch eine vorgenannte Anlenkung der Stempel über einen Auslösehebel mittels Armen möglich. Durch unterschiedlich weit entfernte Anlenkung der Arme entfernt von dem Drehpunkt des Auslösehebels können die beiden jeweils einen unterschiedlichen Weg zurücklegen, insbesondere kann der Oberstempel einen weiteren Weg zurücklegen. Hier hat es sich als vorteilhaft herausgestellt, wenn dieser deutlich oberhalb der Gegenstände für einen sicheren Durchlauf angeordnet ist, während es bei dem Unterstempel ausreicht, wenn dieser knapp unterhalb der Bandoberfläche bzw. der Oberfläche von Zuführung und Abführung verläuft. Unterhalb der Bandoberfläche kann der Folienschlauch oder ein Gegenstand nicht gelangen, was ja auch gerade durch die geringe bzw. möglichst schmale, technisch funktionierende Lücke erreicht werden kann.

In vorteilhafter Ausgestaltung der Erfindung ist vorgesehen, dass in Durchlaufrichtung der Gegenstände zuerst die Seitenschweißung vorgenommen wird, also die obere Folienlage mit der unteren Folienlage zu einem geschlossenen Folienschlauch verbunden wird, und erst danach eine Ablängung mittels der Verschlusseinrichtung in die einzelnen Folienbeutel. Somit befindet sich die Verschlusseinrichtung hinter den Seitenschweißeinrichtungen. Besonders liegen sich die beiden Seitenschweißeinrichtungen genau gegenüber auf beiden Seiten der Durchlaufbahn der Gegenstände.

In weiterer Ausgestaltung der Erfindung sind die Seitenschweißeinrichtungen vorteilhaft so ausgebildet, dass sie die separat Folienlagen auf der halben Höhe des Gegenstandes miteinander verschweißen bzw. dass die Seitenschweißung zur Verbindung der oberen und der unteren Folienlage auf halber Höhe des Gegenstandes vorgenommen wird. Dies bedeutet also, dass sich obere und untere Schweißmittel der Seitenschweißeinrichtungen auf dieser halben Höhe treffen bzw., wenn es Schweißräder odgl. sind als allgemeine Seitenschweißeinrichtungen entsprechend der DE 199 05 888 A1, hier aufeinander aufliegen. Durch eine solche Verschweißung der beiden Folienlagen miteinander genau in der Mitte der Höhe der Gegenstände kann der Folienbeutel für die Gegenstände möglichst eng gemacht werden bzw. die seitlichen Schweißnähte möglichst nahe am Gegenstand liegen. Dadurch kann unter Umständen auf eine Schrumpfung des Folienbeutels verzichtet werden oder aber sie muss nur erheblich weniger stark durchgeführt werden. Des Weiteren kann so unter Umständen erreicht werden, dass ein seitlicher Überstand der Folienränder gar nicht anfällt, sodass dessen aufwändige Entfernung wegfällt, oder aber erheblich weniger Folienverschnitt anfällt. Dies reduziert die Folienkosten und auch den Aufwand für Sammeln und Beseitigen bzw. Entsorgen der Folienreste. Die Seitenschweißeinrichtungen sind vorteilhaft derart höhenverstellbar, dass entweder sie selbst oder aber der Ort der Verschweißung in der Höhe verstellt werden kann.

In vorteilhafter Ausgestaltung der Erfindung ist im Bereich der Seitenschweißeinrichtungen eine Auflageeinrichtung vorgesehen, mit der die Gegenstände gestützt werden können. Diese Auflageeinrichtung ist vorteilhaft höhenveränderlich relativ zu den Seitenschweißeinrichtungen bzw. der Durchlaufbahn, um das vorgenannte seitliche Verschweißen höhenverstellbar zu machen bzw. auf halber Höhe der Gegenstände zu ermöglichen. Eine bevorzugte Auflageeinrichtung kann ein umlaufendes schmales Band sein. Jedenfalls sollte die Auflageeinrichtung angetrieben sein, da hinter den Seitenschweißeinrichtungen ja die quer schweißende Verschlusseinrichtung vorgesehen ist und somit die Gegenstände nur zwischen den Folienlagen liegen. Durch das Ablängen der Folienlagen in die einzelnen Folienbeutel könnte ein Transport nur mittels der Seitenschweißeinrichtungen stattfinden, was aber für deren Schweißergebnis negativ ist. Vorteilhaft kann als angetriebene Auflageeinrichtung ein Band vorgesehen sein, beispielsweise auch als an sich bekanntes Vakuumband, bevorzugt mittig in der Durchlaufbahn.

Vorteilhaft befindet sich hinter den Seitenschweißeinrichtungen zum weiteren Transport ein Band, insbesondere ein Vakuumband. So können die Gegenstände sehr exakt zur Verschlusseinrichtung transportiert werden, da ein Verrutschen bzw. eine ungewollte Positionsänderung nicht mehr möglich ist. Nach bzw. hinter der Verschlusseinrichtung wiederum kann ein Gegenstand mit einem normalen Band odgl. weiter transportiert werden, da dann die Positionierung nicht mehr so genau sein muss.

Bei der Erfindung mit an sich üblichen Bändern als Zuführung und Abführung, bei denen die Lücke dann eine Bandlücke ist, weist die Lückenverstellung eine jeweils zu dieser Bandlücke hin weisende Endrolle des Zuführbandes und eine Endrolle des Abführbandes auf. Diese Endrollen werden dabei entlang der Längsrichtung der Bänder verschoben, zumindest gegensinnig zum Öffnen und Schließen der Bandlücke wie zuvor beschrieben. Dies bedeutet also, dass die Bänder an sich bzw. ihre jeweiligen Umlenk- und Antriebsrollen im wesentlichen unverändert bleiben, auch der Anfang des Zuführbandes und das Ende des Abführbandes. Lediglich mindestens eine der zur Bandlücke hin weisenden Endrollen wird verschoben, wodurch sich ihre effektive Bandlänge bzw. die Breite der Bandlücke verändert. Als Alternative zu drehbaren Endrollen können auch starr angeordnete Messerkanten als runde bzw. abgerundete Endkanten vorgesehen sein, um die das Band umläuft. Sie können vor allem zusammen mit entsprechend geeigneten Textilbändern verwendet werden, was insgesamt den konstruktiven Aufwand senkt.

Bei der Erfindung ist an den Bändern jeweils eine Ausgleichseinrichtung vorgesehen, mit der die Bandspannung aufrecht erhalten wird bei Bewegung der genannten Endrollen, wobei die Ausgleichseinrichtungen gleichartig aufgebaut sind. Die Ausgleichseinrichtungen können also bei dem Abführband etwas Bandlänge aufnehmen, wozu beispielsweise eine an sich bekannte S-artige oder ähnlich mehrfach geschlungene Führung des Bandes vorgesehen sein kann. So erlauben sie quasi eine Verkürzung der Oberseite des Zuführbandes. In entsprechender Art und Weise wird beim Zuführband durch die Ausgleichseinrichtung Bandlänge zugegeben, damit sich die Bandlänge der Oberseite verlängern kann. Dies ist vor allem bei den mitgeführten Schweißsystemen von Vorteil.

Die Ausgleichseinrichtungen an den Bändern für die Bewegung der Bandlücke sind mit der Verschlusseinrichtung verbunden bzw. mit einem horizontal bewegbaren Schlitten, an dem die Verschlusseinrichtung montiert ist. Die Ausgleichseinrichtungen sind dabei direkt miteinander gekoppelt. So überträgt sich die von der Verschlusseinrichtung bzw. dem Mitnehmer aufgezwungene horizontale Bewegung von der einen Ausgleichseinrichtung auch auf die andere. Dadurch kann die Bandlücke auf ein gewünschtes Maß gehalten werden bzw., abhängig von den zu verpackenden Gegenständen oder der Ausbildung der Verschlusseinrichtung, auf einen festen Wert justiert werden.

Die vorgenannten Ausgleichseinrichtungen sind direkt miteinander gekoppelt zum festen Einstellen der Lücke, wobei dieses Einstellen der Bandlücke unabhängig ist von dem Öffnen oder Schließen der Lücke. Diese Kopplung ist längenverstellbar für eine Verlängerung oder Verkürzung der Lücke, die auch bei horizontaler Bewegung der Verschlusseinrichtung gleich bleibt.

Des weiteren ist erfindungsgemäß eine Lückenverstellung zum vorbeschriebenen Öffnen und Schließen der Lücke vorgesehen. Diese weist eine mechanische Zwangskopplung auf zwischen den genannten Stempeln und der Lückenverstellung einerseits derart, dass bei Bewegung von Oberstem-pel und Unterstempel aufeinander zu die Lücke durch die Zwangskopplung weiter geöffnet wird, nachdem sich die Stempel aufeinander zu in Bewegung gesetzt haben und kurz bevor sie aufeinander treffen. So wird Platz für die Stempel in der Lücke geschaffen, um die Folienlagen zu verschweißen bzw. den Folienschlauch zu verschließen und durchzutrennen bzw. abzutrennen zum Vereinzeln als Folienbeutel. Andererseits ist die mechanische Zwangskopplung so ausgebildet, dass sich die Lücke durch die Zwangskopplung wieder zurück bewegt bzw. schließt, wenn sich die Stempel voneinander entfernen. So können die Gegenstände in der Folie gut und sicher über sie hinweg bewegt werden.

Bei kontinuierlich durchlaufenden Gegenständen kann so der Folienschlauch verschlossen und abgelängt werden synchron mit der Bewegung der Gegenstände bzw. des Folienschlauchs. Durch das Öffnen der Lücke mit der mechanischen Zwangskopplung wird sichergestellt, dass die Stempel der Verschlusseinrichtung auch tatsächlich genau in der Lücke aufeinandertreffen und dass diese eben offen ist. Hier ist im Stand der Technik auch schon versucht worden, die Lücke eben so breit bzw. groß zu machen, dass es problemlos ist, dass die Stempel durch die Lücke zwischen Zuführung und Abführung passen, um so aufeinanderzutreffen. Eine derart große Lücke hat jedoch in der Praxis beispielsweise bei Bändern als Zuführung und Abführung den Nachteil, dass beim Verpacken von kleinen Gegenständen oder Gegenständen mit einem sehr einseitig verschobenen Schwerpunkt ein Abkippen in die Bandlücke erfolgen könnte. Dies würde natürlich das Verpackungsergebnis negativ beeinträchtigen bzw. mechanische Probleme aufwerfen. Durch eine sich öffnende Lücke kann dies vermieden werden und sie kann ansonsten faktisch sehr schmal sein.

Durch das vorteilhaft vorgesehene Öffnen der Lücke in Zwangskopplung mit der vertikalen Bewegung von Oberstempel und Unterstempel aufeinander zu wird erreicht, dass die Schritte stets aufeinander abgestimmt erfolgen. Hierfür ist eben die mechanische Zwangskopplung sehr vorteilhaft und sehr wichtig. Es könnte grundsätzlich zwar auch mit separat angetriebenen und durch elektronische Steuerung abgestimmten Funktionseinheiten bzw. Antrieben durchgeführt werden. Dies hat sich aber in der Praxis als zu aufwendig bzw. nicht ausreichend genau herausgestellt. Des weiteren ist eine mechanische Zwangskopplung sehr viel weniger störungsanfällig als eine elektronische Lösung, es entfällt auch die für die Abstimmung notwendige Sensorik.

Die mechanische Zwangskopplung kann in vorteilhafter Ausgestaltung der Erfindung dadurch erreicht werden, dass ein von der Verschlusseinrichtung bzw. von einem der Stempel angetriebener, insbesondere vertikal bewegbarer, Mitnehmer vorgesehen ist, der in einer Kulisse bzw. Nut mit Kurvenform verläuft. Dazu ist der Mitnehmer vorteilhaft eine Laufrolle, so dass Reibung minimiert werden kann.

Die Kulisse weist dabei vorteilhaft zwei Bereiche mit vertikalem Verlauf auf, die etwas zueinander versetzt sind und mittels einer Abschrägung bzw. eines schräg verlaufenden Schrägbereiches miteinander verbunden sind. Somit ergibt sich eine Kulisse nach Art einer S-Kurve, allerdings mit eher geringer Krümmung. Der Übergang der vertikalen Bereiche in den Schrägbereich ist dabei vorteilhaft abgerundet. Somit ergeben sich einigermaßen sanfte Bewegungen bzw. keine zu ruckhaften Bewegungen und Beschleunigungen als unnötige mechanische Belastungen.

Vorteilhaft kann ein Schrägbereich einen Winkel von 30° bis 60° zu der vertikalen Richtung aufweisen, besonders vorteilhaft einen Winkel von 40° bis 50°. Dies ergibt an den beiden Übergängen zu den vertikalen Bereichen in etwa gleichmäßige Belastungen.

Ein Versatz in der Kulisse zwischen den beiden vertikal verlaufenden Bereichen bzw. deren Abstand kann in etwa der Breite der Kulisse an sich entsprechen, aber auch breiter sein. Dies bedeutet, dass der Versatz zwar deutlich vorhanden ist, aber nicht allzu groß ist. Der Versatz der beiden vertikalen Bereiche der Kulisse zueinander definiert auch die Strecke, um die die Bandlücke verlängert bzw. erweitert wird. Beträgt der Versatz bzw. Abstand also beispielsweise 4 cm, so wird auch die Bandlücke 4 cm geöffnet beim Aufeinanderfahren der Stempel. Der zuvor genannte Übergang vom Schrägbereich zu den vertikalen Bereichen mit seiner Abrundung bestimmt dabei Beschleunigung und Abbremsen der Verfahreinrichtung.

In vorteilhafter Ausgestaltung der Erfindung ist die Zwangskopplung so ausgebildet, dass über einen gewissen Bewegungsbereich von Oberstempel und Unterstempel an der Verschlusseinrichtung, also bei der Bewegung in vertikaler Richtung aufeinander zu, noch keine Öffnung der Lücke auftritt. Dadurch kann dem Umstand Rechnung getragen werden, dass Oberstempel und Unterstempel einen gewissen Abstand zueinander aufweisen, durch den die zu verpackenden Gegenstände passen müssen. In der Lücke zwischen zwei Gegenständen, in der der Folienschlauch verschweißt und durchtrennt werden soll, können die beiden Stempel weiter aufeinander zu fahren bzw. ein ganzes Stück aufeinander zu fahren, bevor sie auf den Folienschlauch treffen. Deswegen ist hier auch noch keine direkte Öffnung der Bandlücke notwendig.

Diese Öffnung ergibt sich vorteilhaft erst dann, wenn der Mitnehmer einen Aktivierungsbereich in der Kulisse erreicht. Dieser Aktivierungsbereich ist vorteilhaft der genannte Schrägbereich in der Kulisse. Dabei ist also der Aktivierungsbereich bzw. der Schrägbereich in der Kulisse so ausgebildet, dass erst kurz vor dem Aufeinandertreffen von Unterstempel auf die Bandunterseite der von einem der Stempel angetriebene Mitnehmer den Aktivierungsbereich erreicht. Dies können vorteilhaft 1 cm bis 4 cm sein. Läuft der Mitnehmer dann in den Aktivierungsbereich bzw. Schrägbereich hinein, so erzwingt die Schräge neben der weiter laufenden Vertikalbewegung zusätzlich eine Horizontalbewegung, also das Mitbewegen der Kulisse, und dies wiederum eine Bewegung der Endrolle beispielsweise des Abführbandes. Dies hat dann zur Folge, dass sich die Bandlücke öffnet für den Unterstempel.

In einer Ausgestaltung der Erfindung ist es dabei möglich, dass die Kulisse horizontal bewegbar gelagert ist, vorteilhaft in einer Kulissenplatte, und der Mitnehmer bei seiner Vertikalbewegung durch den Schrägbereich dabei die horizontal bewegbar gelagerte Kulissenplatte sowie eine daran gekoppelte Endrollenverstellung bzw. Lückenverstellung im gewünschten Maß mitbewegt. Dabei ist vorteilhaft der Mitnehmer vertikal bewegbar an der Verschlusseinrichtung angeordnet ist, insbesondere direkt mit dem Unterstempel verbunden für eine gemeinsame und gleiche vertikale Bewegung.

Bei einer vorteilhaften Ausgestaltung der Erfindung sind Oberstempel und Unterstempel mittels Armen mit einem Auslösehebel verbunden an gegenüberliegenden Bereichen, so dass der Drehpunkt des Auslösehebels dazwischen liegt. Anstelle eines Auslösehebels kann auch eine Scheibe odgl. vorgesehen sein. Durch Antreiben des Auslösehebels können die Stempel synchron bewegt bzw. angehoben und abgesenkt werden. Vorteilhaft ist dabei kein Totbereich dazwischen vorgesehen, so dass sich die Stempel bei jeder Bewegung des Auslösehebels überhaupt bewegen und auch entsprechend bewegen. Der Auslösehebel selbst kann wiederum entweder über einen Hebel oder eine Gelenkstange von einem Antrieb angetrieben werden oder aber direkt mit einem Drehantrieb vorgesehen sein. Dies ist aber an sich aus dem Stand der Technik bekannt.

Beim erfindungsgemäßen Verfahren werden also zwei separate Folienlagen seitlich miteinander verschweißt mit den Produkten darin und danach in Längsrichtung abgelängt und verschlossen. Dabei werden die Folienlagen von oben und von unten zugeführt, wobei beide vorteilhaft endlos sind bzw. von Rollen zugeführt werden. Die Gegenstände, die in Folienbeutel aus den Folienlagen zu verpacken sind, werden zugeführt und abgeführt, vorteilhaft auf Bändern. Zuführung und Abführung schließen durch eine Lücke getrennt aneinander an. Die genannte Verschlusseinrichtung zur Ablängung ist an der Lücke angeordnet und weist einen Oberstempel oberhalb der Lücke auf und einen Unterstempel darunter. Oberstempel und Unterstempel sind mechanisch miteinander gekoppelt für eine gleichzeitige und gegensinnige Bewegung. Es wird zuerst die Seitenschweißung der Folienlagen miteinander vorgenommen und dann die Durchtrennung und Ablängung quer zur Durchlaufrichtung durch die Verschlusseinrichtung. Erfindungsgemäß wird die Verschlusseinrichtung bewegt entlang der Transportrichtung der Gegenstände zum Verschließen des Folienschlauches bei kontinuierlich durchlaufenden Gegenständen synchron mit deren Bewegung. Dabei wird die Lücke mitbewegt ohne ihre Breite zu verändern. So werden mit hoher Geschwindigkeit und hoher Präzision einzelne Folienbeutel mit jeweils einem oder mehreren Gegenständen darin hergestellt. Dadurch ist es möflich, neuartige biologisch abbaubare Folien, beispielsweise aus Maisstärke, zu verwenden, die aufgrund ihrer etwas höheren Empfindlichkeit bislang nicht ausreichend schnell und zuverlässig verarbeitet werden konnten.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombination bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im folgenden näher erläutert. In den Zeichnungen zeigen:
- Fig. 1: eine Verpackungsmaschine im Ausschnitt mit Zuführ- und Abführband sowie einer Verschlusseinrichtung,
- Fig. 2: die Verpackungsmaschine entsprechend Fig. 1 mit der Bandführung des Abführbandes im Bereich der Verschlusseinrichtung,
- Fig. 3: eine Vergrößerung einer Kulissenplatte zur Betätigung der Bandlückenverstellung und
- Fig.4: die Verpackungsmaschine entsprechend Fig. 3 mit geöffneter Bandlücke und aneinander anliegenden Stempeln der Verschlusseinrichtung,
- Fig. 5: eine Schrägansicht der an sich bekannten Seitenschweißeinrichtungen und
- Fig. 6: eine Seiteneinsicht einer gesamten Verpackungsmaschine.

### Detaillierte Beschreibung der Ausführungsbeispiele

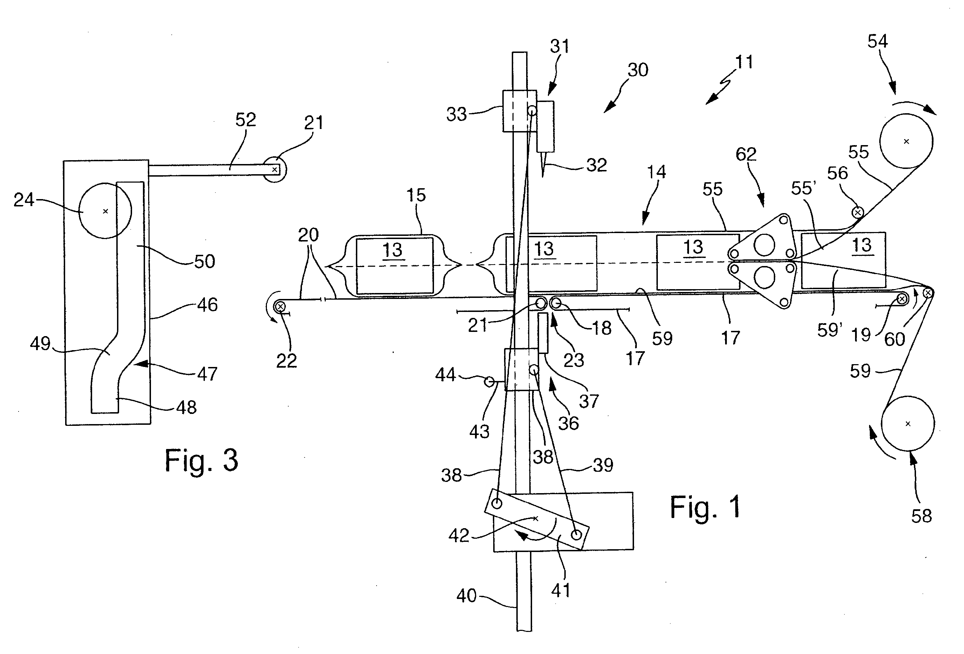

In Fig. 1 ist eine erfindungsgemäße Verpackungsmaschine 11 dargestellt, wie sie grundsätzlich bekannt ist zum Verpacken von Gegenständen 13 in einen Folienschlauch 14 mit Transportrichtung von rechts nach links, wie durch den Pfeil angedeutet ist. Im linken Bereich sind die Gegenstände 13 bereits in vereinzelte Folienbeutel 15 verpackt, welche durch Trennen des Folienschlauchs 14 erzeugt sind. Derartige Verpackungsmaschinen sind grundsätzlich bekannt, siehe beispielsweise die DE 203 04 333 U1. Die Gegenstände 13 kommen von rechts auf dem Zuführband 17, welches nach links eine Endrolle 18 aufweist und am rechten Ende eine Einlaufrolle 19. Abtransportiert werden die Gegenstände 13 in den Folienbeuteln 15 auf einem Abführband 20, welches nach rechts zu eine Endrolle 21 aufweist, also zu der Endrolle 18 des Zuführbandes 17 hin. Nach links zu weist es eine Auslaufrolle 22 auf. Zwischen der rechten Endrolle 18 und der linken Endrolle 21 ist eine Bandlücke 23 gebildet. Diese kann in der Praxis einige Millimeter bis einen Zentimeter oder maximal 4 cm betragen. Sie sollte möglichst gering sein, damit kurze Gegenstände oder solche mit ungünstig verteiltem Schwerpunkt nicht in die Bandlücke 23 hineinfallen oder hineinrutschen beim Transport und insbesondere beim Übergang vom Zuführband 17 zum Abführband 20.

Die Verpackungsmaschine 11 weist eine Verschlusseinrichtung 30 auf mit einem Oberstempel 31, der eine Stempelklinge 32 aufweist, die an einem oberen Schlitten 33 befestigt ist. Die Stempelklinge 32 ist beheizt und so ausgebildet wie im Prinzip im Stand der Technik bekannt. Des weiteren weist die Verschlusseinrichtung 30 einen Unterstempel 36 auf, der ein Gegenlager 37 für die Stempelklinge 32 aufweist, welches an einem unteren Schlitten 38 befestigt ist. Stempelklinge 32 und Gegenlager 37 liegen in vertikaler Richtung genau übereinander. Beim Aufeinandertreffen der beiden wird der Folienschlauch 14, wie nachfolgend noch näher erläutert wird, mit seinen beiden Lagen zusammengedrückt, verschweißt und durchtrennt. So entsteht der links dargestellte separate Folienbeutel 15. Auch dies ist grundsätzlich aus dem Stand der Technik bekannt.

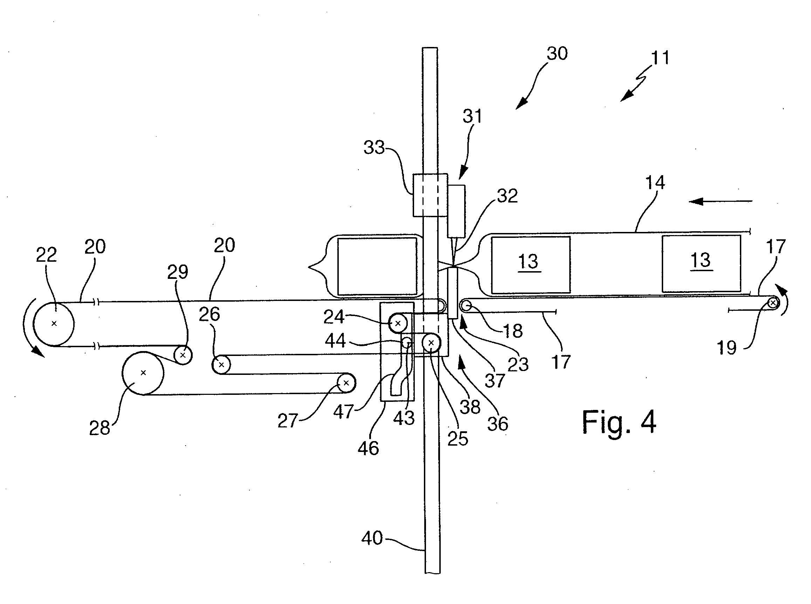

Der obere Schlitten 33 des Oberstempels 31 und der untere Schlitten 38 des Unterstempels 36 sind an der vertikalen Führungsstange 40 verschiebbar gelagert. An dem oberen Schlitten 33 ist eine obere Anlenkstange 34 angeschlagen und an dem unteren Schlitten 38 eine untere Anlenkstange 39. Die Anlenkstangen 34 und 39 sind an gegenüberliegenden Enden eines Auslösehebels 41 angeschlagen, welcher um einen dazwischenliegenden Drehpunkt 42 verdrehbar ist. Wie leicht zu erkennen ist, werden Oberstempel 31 und Unterstempel 36 bei einer Drehung des Auslösehebels 41 entgegen dem Uhrzeigersinn aufeinander zu bewegt, bis sie aufeinandertreffen, wie dies nachfolgend in Fig. 4 dargestellt ist und näher erläutert wird. Dazu weist der Auslösehebel 41 einen nicht näher dargestellten Antrieb auf samt Ansteuerung.

Des weiteren weist die Verpackungsmaschine 11 Erkennungseinrichtungen auf, die erkennen, wann von rechts die Gegenstände 13 auf dem Zuführband 17 zugeführt werden. Dabei weisen die Gegenstände 13 einen gewissen Abstand zueinander auf, welcher als Lücke erkannt werden kann, damit dann in dieser Lücke die Verschlusseinrichtung 30 den Folienschlauch 14 zusammenschweißt und durchtrennt. Diese Erkennungseinrichtungen sind dem Fachmann jedoch ebenfalls bereits bekannt und leicht zu realisieren, so dass sie hier nicht dargestellt sind. Üblicherweise sind es Lichtschranken im Bereich des Zuführbandes 17 und der Verschlusseinrichtung 30.

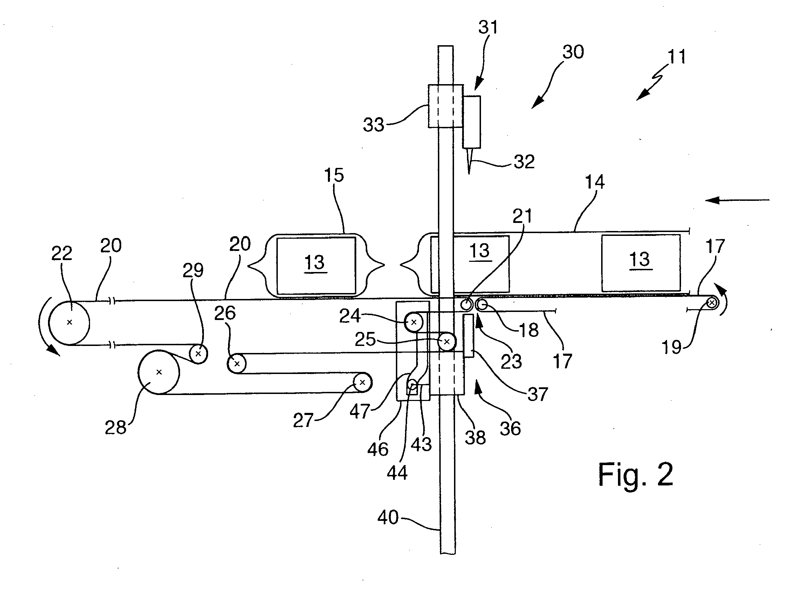

Unten links ist an dem unteren Schlitten 38 ein Rollenhalter 43 befestigt, der nach links steht und an seinem Ende eine Laufrolle 44 aufweist. Die Laufrolle 44 wird also bei Bewegung des Unterstempels 36 nach oben oder unten entsprechend vertikal mitgeführt. Sie wird nachfolgend im Zusammenhang mit Fig. 2 und 3 noch näher erläutert.

Des Weiteren ist in Fig. 1 dargestellt, wie von einer oberen Folienrolle 54 eine obere Folienlage 55 abgewickelt wird und mittels einer oberen Umlenkung 56 auf von rechts herangeführte Gegenstände 13 gebracht wird und nach links läuft. Es ist zu erkennen, dass hinter der oberen Umlenkung 56 die zusehende Seitenkante 56' seitlich an den Gegenständen 13 herunterhängt und deswegen dargestellt ist.

Entsprechend wird von einer unteren Folienrolle 58 eine untere Folienlage 59 abgewickelt und um eine untere Umlenkung 60 geführt, sodass dann auf dem Zuführband 17 aufliegende Gegenstände 13 auch auf der unteren Folielage 59 liegen. Eine untere Seitenkante 59' der unteren Folienlage 59 ist ebenfalls dargestellt.

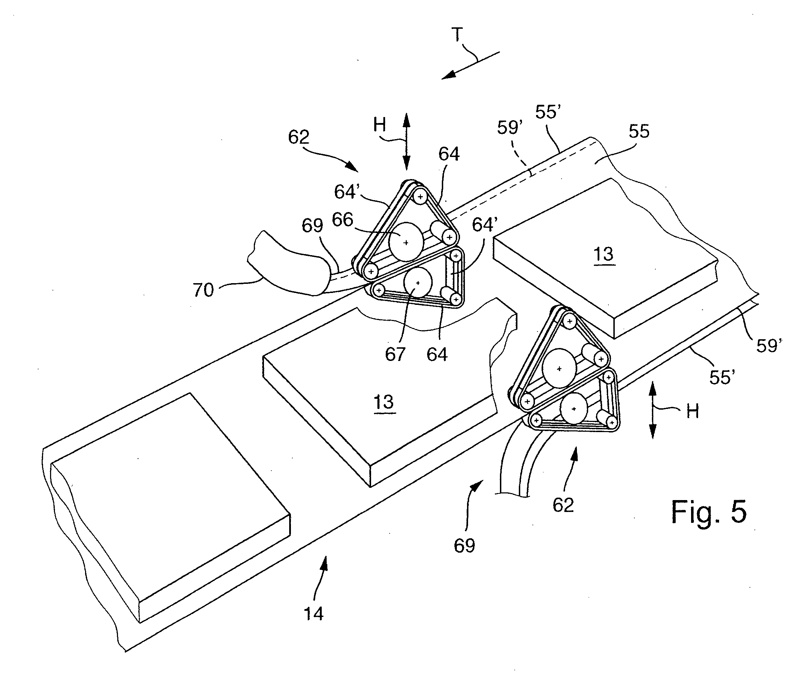

Kurz hinter den Umlenkungen 56 und 60 befindet sich eine Seitenschweißeinrichtung 62, die auch nachfolgend in Fig. 5 näher erläutert wird. Es ist zu erkennen, dass die obere Seitenkante 55' und die untere Seitenkante 59' in die Seitenschweißeinrichtung 62 hinein laufen. Etwa auf der halben Höhe der Gegenstände 13 werden die obere Folienlage 55 und die untere Folienlage 59 miteinander verschweißt, und ein evtl. abstehender seitlicher Überstand wird auf nicht dargestellte Art und Weise abgetrennt und entfernt, siehe hierzu Fig. 5. So befindet sich hinter der Seitenschweißeinrichtung 62 jeder Gegenstand 13 in einem seitlich geschlossen, länglichen Folienschlauch 14.

Die vorgenannte Auflageeinrichtung zur Stützung der Gegenstände 13 im Bereich der Seitenschweißeinrichtungen 62 ist durch das Zuführband 17 gebildet. Es kann als gelochtes Band mit Vakuumeinrichtungen im Bereich der Seitenschweißeinrichtungen 62 darunter auf bekannte Art und Weise zu einem besonders guten und lagesicheren Transport der Gegenstände 13 ausgebildet sein.

In Fig. 2 ist im Vergleich zu Fig. 1 bei der Verschlusseinrichtung 30 auf die Darstellung der Auslenkstangen 34 und 39 samt Auslösehebel 41 verzichtet worden der besseren Verständlichkeit halber. Oberstempel 31 und Unterstempel 36 sind in der geöffneten Position entsprechend Fig. 1. Dafür ist für das Abführband 20 der Bandverlauf näher dargestellt. Das Abführband 20 läuft nämlich rechts um die Endrolle 21 herum wieder nach links zu und dort um eine erste Bewegungsrolle 24. Danach läuft es wieder nach rechts um eine erste Umlenkrolle 25 und dann nach links um eine zweite Bewegungsrolle 26. Von dort läuft es wiederum um eine zweite Umlenkrolle 27. Diesen folgen eine erste Spannrolle 28 und eine zweite Spannrolle 29. Eine der Spannrollen kann angetrieben sein zum Antrieb des Abführbandes 20. Das Zuführband 17 kann, wenngleich nur die linke Endrolle 18 dargestellt ist und ein kurzer Bereich des Zuführbandes 17 rechts davon mit der Einlaufrolle 19, genau spiegelsymmetrisch zum Abführband 20 ausgebildet sein, also auch die Vielzahl der Rollen aufweisen mit gleicher Anordnung. Ähnlich wie die Auslaufrolle 22 sind die Spannrollen 28 und 29 ortsfest angeordnet, können sich also nicht bewegen, außer möglicherweise in geringem Umfang zum Spannen des Abführbandes 20. Die anderen Rollen können sich dagegen unterschiedlich horizontal bewegen, wie nachfolgend noch näher erläutert wird.

Links neben dem unteren Schlitten 38 ist eine Kulissenplatte 46 vorgesehen mit einer Kulisse 47 darin. Sie ist in Fig. 3 näher dargestellt. In der Kulisse 47 läuft die Laufrolle 44, die über einen vereinfacht dargestellten en Rollenhalter 43 mit dem unteren Schlitten 38 verbunden ist.

Die Vergrößerung der Kulissenplatte 46 entsprechend Fig. 3 zeigt den genauen Verlauf der Kulisse 47. Sie weist einen unteren geraden Bereich 48 und einen oberen geraden Bereich 50 auf, die mit einem Schrägbereich 49 ineinander übergehen. Der Schrägbereich 49 verläuft mit einem Winkel von etwa 45° zur vertikalen Richtung bzw. den geraden Bereichen 48 und 50. Die Übergänge sind dabei leicht abgerundet, wobei die Abrundung beim Übergang von unterem Bereich 48 zum Schrägbereich 49 links runder ausgebildet ist als an der rechten Kante der Kulisse 47. Beim anderen Übergang vom oberen Bereich 50 zum Schrägbereich 49 ist es genau andersherum.

Der Versatz der beiden geraden Bereiche 48 und 50 zueinander entspricht in etwa der Breite der Kulisse 47. Die Länge des Schrägbereichs 49 beträgt somit etwas weniger als die doppelte Breite der Kulisse 47.

Die Kulissenplatte 46 kann ein massives Bauteil aus Metall bzw. Stahl sein, in welche die Kulisse 47 vorteilhaft als vertiefte Bahn hineingefräst ist. Dabei kann auch vorgesehen sein, dass die Kulisse 47 nach unten und/oder nach oben offen ist, was die Herstellung durch einen durchlaufenden Fräser vereinfacht sowie den Bewegungsspielraum des unteren Schlittens 38 mit der Laufrolle 44 daran erhöht. Diese könnte zwar auch nach unten aus der Kulisse herausfahren. In der Regel wird es aber keine Bewegung so weit nach unten oder aber auch nach oben geben, weswegen es in der Praxis nicht vorkommen wird. Die Breite der Kulisse 47 entspricht im Wesentlichen dem Durchmesser der Laufrolle 44 bzw. liegt ein kleines Stück darüber.

An der Rückseite der Kulissenplatte 46 ist die erste Bewegungsrolle 24 gelagert. An einem oben rechts abgehenden Endrollenhalter 52 ist ähnlich wie die Laufrolle 44 die Endrolle 21 des Abführbandes 20 gelagert. Dies bedeutet also, dass der Abstand von Endrolle 21 und erster Bewegungsrolle 24 immer gleich ist zueinander und beide eben fest an der Kulissenplatte 46 angeordnet sind.

Die Kulissenplatte 46 ist derart an der Verpackungsmaschine 11 bzw. der Verschlusseinrichtung 30 angeordnet, dass sie in horizontaler Richtung von der Lage in Fig. 2 ausgehend nach links bewegbar ist. Dazu ist eine hier nicht dargestellte, aber leicht vorstellbare Führung realisiert, beispielsweise mit zwei Führungsstangen.

Aus der Fig. 2 ist es auch klar, dass bei Bewegung des unteren Schlittens 38 nach oben und entsprechender Bewegung der Laufrolle 44 nach oben diese in der Kulisse 47 der Kulissenplatte 46 geführt ist. Sobald die Laufrolle 44 bei ihrer Bewegung nach oben an den Schrägbereich 49 der Kulisse 47 kommt, drückt sie die Kulissenplatte 46 nach links. Dabei wird die Kulissenplatte 46 soweit nach links gedrückt, bis die Laufrolle 44 den Schrägbereich 49 wieder passiert hat und in den oberen geraden Bereich 50 einläuft. Dies ist in Fig. 4 dargestellt. Es ist zu erkennen, dass sich die Kulissenplatte 46 um etwa den Versatz der geraden Bereiche 48 und 50 zueinander nach links weg von dem unteren Schlitten 38 und somit auch von der als Referenz dienenden Führungsstange 40 horizontal bewegt hat. Dabei werden entsprechend Fig. 3 die rechte Endrolle 21 und die erste Bewegungsrolle 24 mit nach links bewegt. Wegen der in den Fig. 2 und 4 dargestellten Bandführung des Abführbandes 20 bleibt die Bandspannung erhalten, da die erste Umlenkrolle 25 ihre Position nicht ändert. Allerdings hat sich nun wegen der Bewegung der Endrolle 21 nach links die Bandlücke 23 um eben diesen Versatz geöffnet. Dadurch ist es auch möglich, was in Fig. 4 dargestellt ist, dass der nach oben fahrende Unterstempel 36 mit dem Gegenlager 37 durch die Bandlücke 23 zwischen Zuführband 17 und Abführband 20 hindurch reicht. Im Vergleich zur Fig. 2 ist nun die Bandlücke 23 dafür breit genug. Soll eine Bandlückenverstellung unterbleiben, so kann diese Kulissenplatte 47 durch eine andere Kulissenplatte ausgetauscht werden, die nur eine gerade vertikale Nut aufweist. Dann stellt dies auch eine Führung der Bandlückenverstellung dar, allerdings eben mit Null bzw. ohne Verstellweg. So wird aber die Bandlücke konstant gehalten.

Wie zuvor beschrieben worden ist, wird der Unterstempel 36 ausgehend von Fig. 1 durch entsprechende Bewegung des Auslösehebels 41 und der unteren Auslenkstange 39 nach oben bewegt. Dabei wird über die obere Auslenkstange 34 der Oberstempel 31 nach unten bewegt, so dass sich die beiden, wie in Fig. 4 dargestellt ist, treffen, und zwar ein Stück oberhalb der Ebene der Bänder 17 und 20. Dieser Punkt kann in etwa halber Höhe der Gegenstände 13 liegen, muss dies aber nicht.

Wie aus Fig. 4 zu ersehen ist, erfolgt das Aufeinandertreffen von Oberstempel 31 und Unterstempel 36 in einer ausreichend breiten Lücke zwischen zwei Gegenständen 13. Der von rechts kommende Folienschlauch 14 wird zusammengedrückt und sowohl verschweißt als auch durchtrennt.

Der zeitliche Fortlauf des erfindungsgemäßen Verfahrens anhand von Fig. 4 ausgehend von Fig. 2 bedeutet also, dass mit beginnender Drehung des Auslösehebels 41 und nach oben laufendem Unterstempel 36 die Laufrolle 44 die Kulissenplatte 46 nach links drückt zum Öffnen der Bandlücke 23. Bewegt sich die Laufrolle 44 im oberen geraden Bereich 50, ähnlich wie im unteren geraden Bereich 48, außerhalb des Schrägbereichs 49, so erfolgt also lediglich ein vertikales Verfahren des Unterstempels ohne die Kulissenplatte 46 zu bewegen und somit die Bandlücke 23 zu verändern. Vor allem im oberen geraden Bereich 50 ist dies von Bedeutung, weswegen dieser eben sehr lange ausgebildet ist, so dass das Gegenlager 37 in die dann eben geöffnete Bandlücke 23 einfahren und hindurchreichen kann.

Nach dem Verschweißen gemäß Fig. 4 fahren durch entgegengesetzte Drehung des Auslösehebels 41 im Uhrzeigersinn Oberstempel 31 und Unterstempel 36 wieder auseinander, um den Weg für weitere hindurchzuführende Gegenstände 13 samt Folienschlauch 14 freizugeben. Dabei läuft die Laufrolle 44 mit dem Unterstempel 36 wieder nach unten, bei Erreichen des Schrägbereichs 49 drückt sie die Kulissenplatte 46 nach rechts in die Ausgangslage gemäß Fig. 2 zurück. Dadurch wird, weil sich die Endrolle 21 und die erste Bewegungsrolle 24 wieder nach rechts bewegen, das Abführband 20 wieder nach rechts zum Zuführband 17 hin verlängert und somit die Bandlücke 23 wieder im Wesentlichen geschlossen entsprechend der Darstellung gemäß Fig. 2. Wichtig bei der Öffnung bzw. Verstellung der Bandlücke 23 ist noch, dass mit Bezug auf das Abführband 20 die linke Auslaufrolle 22 nicht bewegt wird, sondern sozusagen lediglich das rechte Ende des Abführbandes 20.

Einstellmöglichkeiten zum genauen Zeitpunkt einer synchronen Bewegung sind gegeben, indem die Kulisse 47 etwas anders gefertigt sein kann oder aber möglicherweise die Laufrolle 44 samt Rollenhalter 43 in ihrer Höhenbefestigung am unteren Schlitten 38 eingestellt werden kann.

Bei der dargestellten Ausführungsvariante wird das Zuführband 17 nicht verändert, insbesondere nicht an seiner linken Endrolle 18. In leicht vorstellbarer alternativer Konstruktion der Erfindung kann jedoch durch die Kulissenplatte 46 als Auslöser für die Bandlückenverstellung noch mit einem weiteren mechanischen Hebel eine ähnliche Verstelleinrichtung am Zuführband 17 angreifen. Dies ist über einen Umlenkhebel möglich, so dass bei Bewegung der Kulissenplatte 46 nach links zum Öffnen der Bandlücke auf eine den Rollen 21 und 24 entsprechende Anordnung am Zuführband 17 eine Kraft nach rechts ausgeübt wird, so dass sich die Bandlücke 23 von einer Ursprungslage aus in beide Richtungen und somit noch weiter öffnet. Dazu kann am Zuführband 17 eine spiegelbildliche Anordnung der Rollen wie beim Abführband 20 vorgesehen sein.

In nochmals weiterer Ausgestaltung der Erfindung kann vorgesehen sein, was grundsätzlich aber auch bekannt ist, dass die Verschlusseinrichtung 30 entlang der Bewegungsrichtung der Gegenstände 13 bewegbar ist. Dies kann zu dem Zweck erfolgen, dass zum Zeitpunkt des Aufeinandertreffens von Oberstempel 31 und Unterstempel 36 die Verschlusseinrichtung 30 synchron mit den Gegenständen 13 und dem Folienschlauch 14 und somit mit der Lücke zwischen zwei Gegenständen 13 mitläuft. Dann braucht dieser Transport und somit die Bänder 17 und 20 nicht gestoppt zu werden und die Verschweißung am Folienschlauch 14 kann ohne Relativbewegung in Transportrichtung zu diesem stattfinden. Für ein solches Verfahren der Verschlusseinrichtung kann dann quasi nicht nur der in Fig. 1 gezeigte Teil bewegt werden, beispielsweise über eine Länge von etwa 10cm bis 40cm oder maximal 80cm. Dazu ist dann eben die Verschlusseinrichtung 30 bzw. vor allem die Führungsstange 40 samt Auslösehebel 41 an einem nicht dargestellten, horizontal bewegbaren Schlitten mit separatem Antrieb angeordnet. Um in diesem Fall aber auch die Bandlücke 23 mitzubewegen, damit entsprechend Fig. 4 der Unterstempel 36 bzw. das Gegenlager 37 hindurch fahren kann, sind die Rollen 25 und 26 ebenfalls mittels des Schlittens bewegbar bzw. vorteilhaft an diesem gelagert. Während dieser Bewegung nach links zum Aufsynchronisieren auf die Bandgeschwindigkeit bzw. die Bewegung der Gegenstände 13 kommt zusätzlich bei Bewegung der Stempel noch die Bewegung der Kulissenplatte 46 nach links dazu, wie zuvor erläutert. Da sich diese Bewegungen aber nicht stören können sie sich problemlos überlagern. In diesem Fall ist dann für das Zuführband 17 zwingend eine Rollenanordnung wie links beim Abführband 20 vorgesehen, zumindest bezüglich eines Mitwanderns der rechten Endrolle 18 nach links samt nicht dargestellter Längenausgleichseinrichtung, damit die in Fig. 1 dargestellte rechte Einlaufrolle 19 des Zuführbandes 17 unbewegt bleiben kann bei aufrechterhaltener Bandspannung.

Der Vorteil der Erfindung mit der mechanischen Zwangskopplung zwischen der Bewegung der Stempel 31 und 36, insbesondere also des Unterstempels 36, und der Bandlücke 23 besteht eben darin, dass hier nicht zwei separate Antriebe mittels Steuerungstechnik genau aufeinander abgestimmt werden müssen. Gleichzeitig ist es eben essentiell, dass sich die Bandlücke 23 bei Bewegung des Oberstempels 36 samt Gegenlager 37 nach oben öffnet. Ansonsten würde das Gegenlager 37 an dem Abführband 20 hängen bleiben und die Verpackungsmaschine würde beschädigt werden, was sowohl bei Bewegung nach oben als auch bei Bewegung nach unten passieren könnte.

In Fig. 5 ist in der Schrägansicht dargestellt, wie die beiden Seitenschweißeinrichtungen 62 aus Fig. 1 aufgebaut sind und arbeiten. Zu erkennen sind bei der hinteren Seitenschweißeinrichtung 62 die obere Seitenkante 55' der oberen Folienlage 55 und die untere Seitenkante 59', die gestrichelt dargestellt ist. Die Seitenschweißeinrichtung 62 weist zwei umlaufende Riemenpaare auf, die aus einem vorderen schmalen Riemen 64 und einem hinteren breiteren Riemen 64' bestehen. Diese Riemenpaare 64 und 64' sind sowohl oberhalb der Ebene der miteinander verbundenen Folienlagen 55 und 59 als auch unterhalb davon vorgesehen. Die Riemen 64 und 64' laufen jeweils um nicht näher bezeichnete, grundsätzlich aber aus der vorgenannten DE 19905888 A1 bekannte Umlenkrollen. In dem oberen Riemendreieck läuft ein Trenn-Schweißrad 66 auf der genannten Ebene der Folienlagen 55 und 59 zwischen dem schmalen Riemen 64 und dem breiten Riemen 64'. Dabei liegt es an einem Gegenrad 67 an, das unter der Ebene der Folienlagen im Dreieck der unteren Riemen gelagert ist. Beide Räder 66 und 67 sind vorteilhaft synchron angetrieben. Im Bereich ihrer Anlage aneinander werden die beiden Folienlagen 55 und 59 miteinander verbunden bzw. verschweißt sowie mögliche seitliche Überstände 69 mittels einer hinten dargestellten Abführeinrichtung 70 entfernt.

Wie zuvor erläutert worden ist, kann das Verschweißen auf halber Höhe der Gegenstände 13 erfolgen. Die Höhenverstellbarkeit der Seitenschweißeinrichtungen 62 ist durch die Pfeile H dargestellt. So treffen sich die Räder 66 und 67 auf dieser Höhe bzw. liegen aneinander an. Diese Seitenschweißung kann jeweils möglichst nahe an der Seite der Gegenstände 13 erfolgen. Dadurch kann ein seitlicher Überstand an Folie über die Gegenstände 13 verringert werden und bei Wahl einer geeigneten Breite der Folienlagen 55 und 59 unter Umständen sogar ganz vermieden werden.

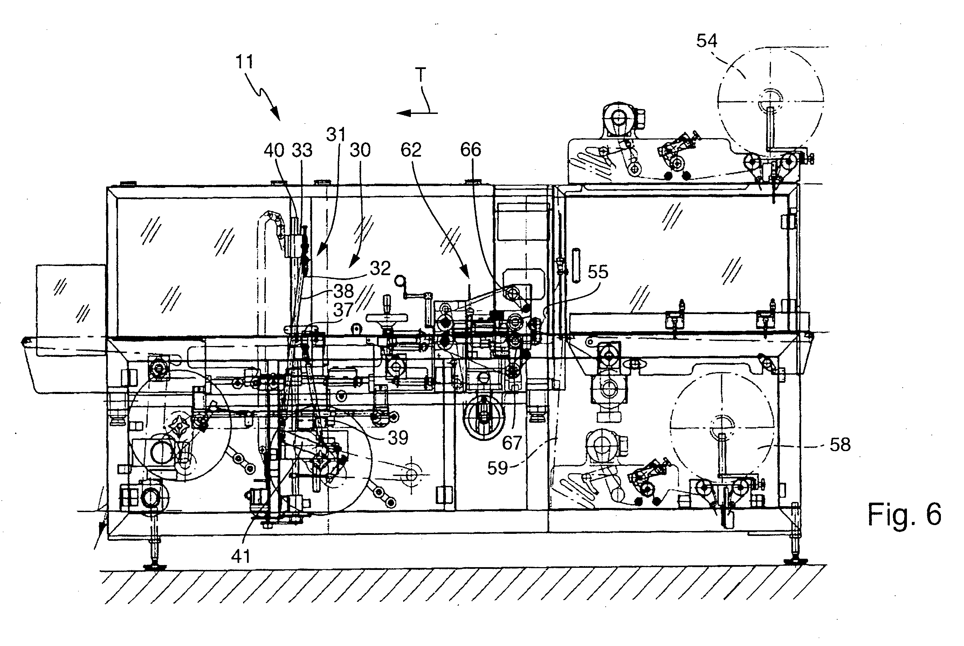

In Fig. 6 ist eine gesamte Verpackungsmaschine 11 in Seitenansicht dargestellt. In ihr ist das dargestellt, was zuvor im Detail erläutert worden ist, sodass nicht erneut darauf eingegangen werden muss. Die Seitenschweißeinrichtungen 62 sind höhenveränderlich bzw. können in ihrer Höhe eingestellt werden, um die Verschweißung auf der gewünschten halben Höhe der Gegenstände 13 durchzuführen.

## Patentansprüche

1. Verpackungsmaschine (11) zum Verpacken von Gegenständen (13) in einen Folienbeutel (15) mit einer Verschlusseinrichtung (30) für den Folienbeutel zu dessen Abtrennung und Verschluss, wobei der Folienbeutel aus einer oberen Folienlage (55) und einer separat davon zugeführten unteren Folienlage (59) besteht bzw. hergestellt ist durch jeweils eine an beiden Seiten des Folienschlauchs (14) angeordnete Seitenschweißeinrichtung (62), wobei die Verpackungsmaschine (11) eine Zuführung (17) und eine Abführung (20) für die zu verpackenden Gegenstände (13) aufweist, die durch eine Lücke (23) getrennt aneinander anschließen, wobei die Verschlusseinrichtung (30) an der Lücke angeordnet ist und einen Oberstempel (31) oberhalb der Lücke (23) aufweist und einen Unterstempel (36) unterhalb der Lücke, wobei Oberstempel und Unterstempel mechanisch miteinander gekoppelt sind für eine gleichzeitige und gegensinnige Bewegung, wobei die Verschlusseinrichtung (30) bewegbar ist entlang der Transportrichtung (T) der Gegenstände (13) zum Verschließen des Folienschlauches (14) bei kontinuierlich durchlaufenden Gegenständen (13) synchron mit deren Bewegung, wobei dabei die Lücke (23) mitbewegbar ist, wobei die Verschlusseinrichtung (30) an einem horizontal bewegbaren Schlitten angeordnet ist, wobei eine jeweils zur Lücke (23) hin weisende Endrolle (18) eines Zuführbandes (17) als Zuführung und eine Endrolle (21) eines Abführbandes (20) als Abführung vorgesehen sind als Lückenverstellung, wobei die Endrollen (18, 21) entlang der Längsrichtung der Bänder (17, 20)verschiebbar sind bei Bewegung der Verschlusseinrichtung (30) und auch gegensinnig sind verschiebbar zum Verändern bzw. Öffnen und Schließen der Bandlücke (23), **dadurch gekennzeichnet, dass** Zuführband (17) und Abführband (20) gleichartig aufgebaute Ausgleichseinrichtungen (24, 25, 26) aufweisen, um die Bandspannung aufrecht zu erhalten bei Bewegung der zuvor genannten Endrollen (18, 21), wobei die erste Rolle (19) des Zuführbandes (17) und die letzte Rolle (22) des Abführbandes (20) unverändert bleiben, wobei die Ausgleichseinrichtungen (24, 25, 26) direkt miteinander gekoppelt sind zum festen Einstellen der Bandlücke (23), wobei dieses Einstellen der Bandlücke unabhängig ist von dem Öffnen oder Schließen der Bandlücke (23), wobei diese Kopplung längenverstellbar ist für eine Verlängerung oder Verkürzung der Bandlücke, die auch bei horizontaler Bewegung der Verschlusseinrichtung (30) gleich bleibt und wobei mindestens eine der Ausgleichseinrichtungen (24, 25, 26) mit dem Schlitten verbunden bzw. gekoppelt ist für eine gleichsinnige Bewegung, wobei eine Lückenverstellung zum Öffnen und Schließen der Lücke (23) vorgesehen ist, wobei eine mechanische Zwangskopplung vorgesehen ist zwischen den Stempeln (31, 36) und der Lückenverstellung einerseits derart, dass bei Bewegung von Oberstempel (31) und Unterstempel (36) aufeinander zu die Lücke (23) durch die Zwangskopplung weiter geöffnet wird nachdem sich die Stempel (31, 36) aufeinander zu in Bewegung gesetzt haben und kurz bevor sie aufeinandertreffen, und andererseits derart, dass sich die Lücke (23) durch die Zwangskopplung wieder zurück bewegt bzw. schließt wenn sich die Stempel (31, 36) voneinander entfernen.

2. Verpackungsmaschine nach Anspruch 1, **dadurch gekennzeichnet, dass** an der Verschlusseinrichtung (30) der Abstand von Oberstempel (31) und Unterstempel (36) zu der Bandebene bzw. der Lücke (23) dazwischen einstellbar ist, insbesondere gleichzeitig bzw. synchron einstellbar ist.

3. Verpackungsmaschine nach einem der vorhergehenden Ansprüche, **dadurch gekennzeichnet, dass** in Durchlaufrichtung (T) der Gegenstände (13) zuerst die Seitenschweißeinrichtungen (62) vorgesehen sind und dann die Verschlusseinrichtung (30).

4. Verpackungsmaschine nach einem der vorhergehenden Ansprüche, **dadurch gekennzeichnet, dass** die Seitenschweißeinrichtungen (62) ausgebildet sind zur Verschweißung der oberen Folienlage (55) mit der unteren Folienlage (59) auf der halben Höhe des Gegenstandes (13) bzw. sich obere und untere Schweißmittel (66, 67) der Seitenschweißeinrichtungen (62) auf dieser Höhe treffen bzw. aufeinander aufliegen.

5. Verpackungsmaschine nach einem der vorhergehenden Ansprüche, **dadurch gekennzeichnet, dass** eine Auflageeinrichtung zur Stützung der Gegenstände (13) im Bereich der Seitenschweißeinrichtungen (62) vorgesehen ist, vorzugsweise ein schmales umlaufendes Band, wobei insbesondere die Auflageeinrichtung angetrieben ist.

6. Verpackungsmaschine nach einem der vorhergehenden Ansprüche, **dadurch gekennzeichnet, dass** hinter den Seitenschweißeinrichtungen (62) ein Band, insbesondere ein Vakuumband, vorgesehen ist, für einen exakten Transport der Gegenstände (13) zur Verschlusseinrichtung (30), wobei vorzugsweise hinter der Verschlusseinrichtung ein normales Auslaufband (20) vorgesehen ist.

7. Verpackungsmaschine nach einem der vorhergehenden Ansprüche, **dadurch gekennzeichnet, dass** für die Zwangskopplung ein über einen von der Verschlusseinrichtung (30) bzw. von einem Stempel (36) angetriebener, vertikal bewegbarer Mitnehmer (44) vorgesehen ist, der in einer Kulisse (47) bzw. Nut mit Kurvenform läuft, wobei die Kulisse als Auslöser für die Verstellung der Lücke (23) ausgebildet ist und mit der Lückenverstellung verbunden ist zu deren Betätigung, wobei insbesondere die Kulisse (47) mit zwei Bereichen (48, 50) in vertikaler Richtung verläuft und wobei die zwei Bereiche mittels einer Abschrägung bzw. eines schräg verlaufenden Schrägbereiches (49) miteinander verbunden sind nach Art einer S-Kurve, wobei vorzugsweise der Schrägbereich (49) mit einem Winkel von 30° bis 60° zu der vertikalen Richtung verläuft.

8. Verpackungsmaschine nach Anspruch 7, **dadurch gekennzeichnet, dass** die zwei vertikal verlaufenden Bereiche (48, 50) einen Versatz in der Kulisse (47) bzw. Nut zwischen den beiden Bereichen zueinander aufweisen und der Versatz in etwa der Breite der Kulisse (47) entspricht.

9. Verpackungsmaschine nach Anspruch 7 oder 8, **dadurch gekennzeichnet, dass** die Kulisse (47) relativ zu der Verschlusseinrichtung (30) horizontal bewegbar an der Verpackungsmaschine (11) angeordnet ist und der Mitnehmer (44) vertikal bewegbar an der Verschlusseinrichtung (30) angeordnet ist, insbesondere direkt mit dem Unterstempel (37) verbunden ist für eine gemeinsame und gleiche vertikale Bewegung.

10. Verpackungsmaschine nach einem der Ansprüche 7 bis 9, **dadurch gekennzeichnet, dass** die Zwangskopplung so ausgebildet ist, dass sich über einen gewissen Bewegungsbereich von Oberstempel (31) und Unterstempel (37) an der Verschlusseinrichtung (30) noch keine seitliche Verstellung der Lücke (23) ergibt, sondern erst dann, wenn ein Aktivierungsbereich erreicht ist, wobei insbesondere der Aktivierungsbereich der Schrägbereich (49) nach Anspruch 7 oder 8 ausgebildet ist und in der Kulisse (47) so ausgebildet ist, dass der von einem der Stempel (37) angetriebene Mitnehmer (44) den Aktivierungsbereich erst erreicht, kurz bevor Oberstempel (31) und Unterstempel (37) aufeinander treffen.

11. Verpackungsmaschine nach einem der vorhergehenden Ansprüche, **dadurch gekennzeichnet, dass** Oberstempel (31) und Unterstempel (37) mittels Armen (38, 39) mit einem Auslösehebel (41) verbunden sind an gegenüberliegenden Bereichen mit dem Drehpunkt (42) des Auslösehebels dazwischen, wobei durch Antreiben des Auslösehebels (41) die Stempel (31, 37) synchron gegensinnig bewegbar bzw. anhebbar oder absenkbar sind, vorzugsweise ohne Totbereich dazwischen.

12. Verfahren zum Verpacken von Gegenständen (13) in einen Folienbeutel (15) mit einer Verschlusseinrichtung (30) und Seitenschweißeinrichtungen (62) für eine von oben zugeführte obere Folienlage (55) und eine von unten zugeführte untere Folienlage (59) zu deren Seitenschweißung, Durchtrennung und Verschluss, wobei eine Zuführung (17) und eine Abführung (20) für zu verpackende Gegenstände vorgesehen sind, die durch eine Lücke (23) getrennt aneinander anschließen, wobei die Verschlusseinrichtung (30) an einem horizontal bewegbaren Schlitten (38) an der Lücke (23) angeordnet ist und einen Oberstempel (31) oberhalb der Lücke (23) aufweist und einen Unterstempel (37) unterhalb der Lücke, wobei Oberstempel (31) und Unterstempel (37) mechanisch miteinander gekoppelt sind für eine gleichzeitige und gegensinnige Bewegung, wobei zuerst die Seitenschweißung der Folienlagen (55, 59) miteinander vorgenommen wird und dann die Durchtrennung durch die Verschlusseinrichtung (30) zur Vereinzelung in Folienbeutel (15) mit dem Gegenstand (13) darin, wobei die Verschlusseinrichtung (30) bewegt wird entlang der Transportrichtung (T) der Gegenstände (13) zum Verschließen des Folienschlauches (14) bei kontinuierlich durchlaufenden Gegenständen (13) synchron mit deren Bewegung, wobei dabei die Lücke (23) mitbewegt wird ohne Veränderung ihrer Breite, wobei eine jeweils zur Lücke (23) hin weisende Endrolle (18) eines Zuführbandes (17) als Zuführung und eine Endrolle (21) eines Abführbandes (20) als Abführung vorgesehen sind als Lückenverstellung, wobei die Endrollen (18, 21) entlang der Längsrichtung der Bänder (17, 20) verschiebbar sind bei Bewegung der Verschlusseinrichtung (30) und auch gegensinnig sind verschiebbar zum Verändern bzw. Öffnen und Schließen der Bandlücke (23), **dadurch gekennzeichnet, dass** Zuführband (17) und Abführband (20) gleichartig aufgebaute Ausgleichseinrichtungen (24, 25, 26) aufweisen, um die Bandspannung aufrecht zu erhalten bei Bewegung der zuvor genannten Endrollen (18, 21), wobei die erste Rolle (19) des Zuführbandes (17) und die letzte Rolle (22) des Abführbandes (22) unverändert bleiben, wobei die Ausgleichseinrichtungen (24, 25, 26) direkt miteinander gekoppelt sind zum festen Einstellen der Bandlücke (23), wobei dieses Einstellen der Bandlücke (23) unabhängig ist von dem Öffnen oder Schließen der Bandlücke, wobei diese Kopplung längenverstellbar ist für eine Verlängerung oder Verkürzung der Bandlücke (23), die auch bei horizontaler Bewegung der Verschlusseinrichtung (30) gleich bleibt und wobei mindestens eine der Ausgleichseinrichtungen (24, 25, 26) mit dem Schlitten (38) verbunden bzw. gekoppelt ist für eine gleichsinnige Bewegung, wobei eine Lückenverstellung zum Öffnen und Schließen der Lücke (23) vorgesehen ist, wobei eine mechanische Zwangskopplung vorgesehen ist zwischen den Stempeln (31, 36) und der Lückenverstellung einerseits derart, dass bei Bewegung von Oberstempel (31) und Unterstempel (36) aufeinander zu die Lücke (23) durch die Zwangskopplung weiter geöffnet wird nachdem sich die Stempel aufeinander zu in Bewegung gesetzt haben und kurz bevor sie aufeinandertreffen, und andererseits derart, dass sich die Lücke (23) durch die Zwangskopplung wieder zurück bewegt bzw. schließt wenn sich die Stempel (31, 36) voneinander entfernen.

## Claims

1. Packaging machine (11) for packaging objects (13) in a film pouch (15), having a closure installation (30) for the film pouch for severing and closing the latter, wherein the film pouch is composed of an upper film layer (55) and a lower film layer (59) which is infed separately from the upper film layer (55) and manufactured from a lateral welding installation (62) which is disposed in each case on both sides of the tubular film (14), respectively, wherein the packaging machine (11) has an infeed (17) and an outfeed (20) for the objects (13) to be packaged, which adjoin one another so as to be separated by a gap (23), wherein the closure installation (30) is disposed on the gap and has an upper die (31) above the gap (23) and a lower die (36) below the gap, wherein the upper die and the lower die, for a simultaneous and opposing movement, are mechanically interlinked, wherein the closure installation (30) for closing the tubular film (14) is movable along the conveying direction (T) of the objects (13), in the case of objects (13) running through in a continuous manner so as to be synchronous with the movement thereof, wherein the gap (23) hereby is conjointly movable, wherein the closure installation (30) is disposed on a horizontally movable slider, wherein an end roller (18) of an infeed belt (17), as an infeed, which points to the gap (23), and an end roller (21) of an outfeed belt (20), as an outfeed, are in each case provided for gap adjustment, wherein the end rollers (18, 21) are displaceable along the longitudinal direction of the belts (17, 20) in the event of movement of the closure installation (30) and are also displaceable in opposite directions for modifying or opening and closing, respectively, the belt gap (23), **characterized in that** the infeed belt (17) and the outfeed belt (20) have compensation installations (24, 25, 26) of an identical type of construction, so as to maintain the belt tension in the event of movement of the aforementioned end rollers (18, 21), wherein the first roller (19) of the infeed belt (17) and the last roller (22) of the outfeed belt (20) remain unmodified, wherein the compensation installations (24, 25, 26) are directly interlinked so as to fixedly adjust the belt gap (23), wherein this adjustment of the belt gap is independent of the opening or closing of the belt gap (23), wherein this linkage is readjustable for length in order to lengthen or shorten the belt gap which remains the same even in the event of horizontal movement of the closure installation (30), and wherein at least one of the compensation installations (24, 25, 26) for movement in the same direction is connected or linked to the slider, respectively, wherein a gap readjustment for opening and closing the gap (23) is provided, wherein a positive mechanical linkage is provided on the one hand between the dies (31, 36) and the gap adjustment in such a manner that in the event of movement of the upper die (31) and of the lower die (36) towards one another the gap (23) is further opened by the positive linkage once the dies (31, 36) have commenced movement towards one another and shortly before they meet one another, and on the other hand in such a manner that the gap (23) on account of the positive linkage is moved back again or is closed, respectively, when the dies (31, 36) move apart.

2. Packaging machine according to Claim 1, **characterized in that** the spacing of the upper die (31) and the lower die (36) from the belt plane or the gap (23) therebetween, respectively, is adjustable, in particular simultaneously and/or synchronously adjustable, at the closure installation (30).

3. Packaging machine according to one of the preceding claims, **characterized in that** in the processing direction (T) of the objects (13), first the lateral welding installations (62) and then the closure installation (30) are provided.

4. Packaging machine according to one of the preceding claims, **characterized in that** the lateral welding installations (62) are configured for welding the upper film layer (55) to the lower film layer (59) at mid height of the object (13), or that the upper and lower welding means (66, 67) of the lateral welding installations (62) meet and/or bear on one another at this height, respectively.

5. Packaging machine according to one of the preceding claims, **characterized in that** a bearing installation, preferably a narrow revolving belt, for supporting the objects (13) in the region of the lateral welding installations (62) is provided, wherein in particular the bearing installation is driven.

6. Packaging machine according to one of the preceding claims, **characterized in that** a belt, in particular a vacuum belt, is provided behind the lateral welding installations (62), for precise conveying of the objects (13) to the closure installation (30), wherein preferably a normal delivery belt (20) is provided behind the closure installation.

7. Packaging machine according to one of the preceding claims, **characterized in that** a vertically movable dog (44) which is driven by way of the closure installation (30) or by a die (36), respectively, and which runs in a gate (47) or in a curved groove, respectively, is provided for the positive linkage, wherein the gate is configured as a trigger for the readjustment of the gap (23) and is connected to the gap readjustment for the actuation thereof, wherein in particular the gate (47) by way of two regions (48, 50) runs in the vertical direction, and wherein the two regions are interconnected in the manner of an S-curve by means of an inclination or an obliquely running inclined region (49), wherein preferably the inclined region (49) runs at an angle of 30° to 60° in relation to the vertical direction.

8. Packaging machine according to Claim 7, **characterized in that** the two vertically running regions (48, 50) have an offset in relation to one another in the gate (47) or the groove between the two regions, respectively, and that the offset corresponds to approximately the width of the gate (47).

9. Packaging machine according to Claim 7 or 8, **characterized in that** the gate (47) is disposed on the packaging machine (11) so as to be horizontally movable in relation to the closure installation (30), and that the dog (44) is disposed on the closure installation (30) so as to be vertically movable, in particular for a common and identical vertical movement is directly connected to the lower die (37).

10. Packaging machine according to one of Claims 7 to 9, **characterized in that** the positive linkage is configured such that no lateral readjustment of the gap (23) results yet on the closure installation (30) across a certain range of movement of the upper die (31) and lower die (37), but only once an activation region is reached, wherein in particular the inclined region (49) according to Claim 7 or 8 is configured as the activation region and is configured in the gate (47) such that the dog (44) which is driven by one of the dies (37) reaches the activation region only shortly before the upper die (31) and the lower die (37) meet one another.

11. Packaging machine according to one of the preceding claims, **characterized in that** the upper die (31) and the lower die (37) on opposite regions are connected by way of arms (38, 39) to a trigger lever (41), having the pivot point (42) of the trigger lever therebetween, wherein by driving the trigger lever (41) the dies (31, 37) are synchronously movable or liftable or lowerable, respectively, in opposite directions, preferably without a dead range therebetween.

12. Method for packaging objects (13) in a film pouch (15), having a closure installation (30) and lateral welding installations (62) for an upper film layer (55), which is infed from above, and a lower film layer (59), which is infed from below, for lateral welding, severing and closure thereof, wherein an infeed (17) and an outfeed (20) for objects to be packaged, which adjoin one another so as to be separated by a gap (23), are provided, wherein the closure installation (30) is disposed on a horizontally movable slider (38) on the gap (23) and has an upper die (31) above the gap (23) and a lower die (37) below the gap, wherein the upper die (31) and the lower die (37), for a simultaneous and opposing movement, are mechanically interlinked, wherein first the lateral welding of the film layers (55, 59) to one another is performed and then the severing by the closure installation (30) for singularizing the film pouches (15) having the object (13) therein, wherein the closure installation (30) for closing the tubular film (14) is moved along the conveying direction (T) of the objects (13), in the case of objects (13) running through in a continuous manner so as to be synchronous with the movement thereof, wherein the gap (23) hereby is conjointly moved without modifying the width thereof, wherein an end roller (18) of an infeed belt (17), as an infeed, which points to the gap (23), and an end roller (21) of an outfeed belt (20), as an outfeed, are in each case provided for gap adjustment, wherein the end rollers (18, 21) are displaceable along the longitudinal direction of the belts (17, 20) in the event of movement of the closure installation (30) and are also displaceable in opposite directions for modifying or opening and closing, respectively, the belt gap (23), **characterized in that** the infeed belt (17) and the outfeed belt (20) have compensation installations (24, 25, 26) of an identical type of construction, so as to maintain the belt tension in the event of movement of the aforementioned end rollers (18, 21), wherein the first roller (19) of the infeed belt (17) and the last roller (22) of the outfeed belt (20) remain unmodified, wherein the compensation installations (24, 25, 26) are directly interlinked so as to fixedly adjust the belt gap (23), wherein this adjustment of the belt gap (23) is independent of the opening or closing of the belt gap, wherein this linkage is readjustable for length in order to lengthen or shorten the belt gap (23) which remains the same even in the event of horizontal movement of the closure installation (30), and wherein at least one of the compensation installations (24, 25, 26) for movement in the same direction is connected or linked to the slider (38), respectively, wherein a gap readjustment for opening and closing the gap (23) is provided, wherein a positive mechanical linkage is provided on the one hand between the dies (31, 36) and the gap adjustment in such a manner that in the event of movement of the upper die (31) and of the lower die (36) towards one another the gap (23) is further opened by the positive linkage once the dies have commenced movement towards one another and shortly before they meet one another, and on the other hand in such a manner that the gap (23) on account of the positive linkage is moved back again or is closed, respectively, when the dies (31, 36) move apart.

## Revendications

1. Machine d'emballage (11) pour emballer des objets (13) dans un sachet en film (15) comprenant un dispositif de fermeture (30) pour le sachet en film en vue de son sectionnement et de sa fermeture, le sachet en film se composant d'une couche de film supérieure (55) et d'une couche de film inférieure (59) acheminée séparément de celle-ci, ou étant fabriqué par un dispositif de soudage des côtés (62) disposé respectivement des deux côtés du tuyau de film (14), la machine d'emballage (11) présentant une alimentation (17) et une évacuation (20) pour les objets à emballer (13), qui se raccordent l'une à l'autre de manière séparée par un espace (23), le dispositif de fermeture (30) étant disposé au niveau de l'espace et présentant un poinçon supérieur (31) au-dessus de l'espace (23) et un poinçon inférieur (36) en dessous de l'espace, le poinçon supérieur et le poinçon inférieur étant accouplés l'un à l'autre mécaniquement en vue d'un mouvement simultané et de sens contraires, le dispositif de fermeture (30) pouvant se déplacer le long de la direction de transport (T) des objets (13) pour fermer le tuyau de film (14) lorsque les objets (13) avancent en continu de manière synchrone avec leur déplacement, l'espace (23) pouvant en l'occurrence être déplacé en même temps, le dispositif de fermeture (30) étant disposé au niveau d'un chariot déplaçable horizontalement, un rouleau d'extrémité (18) d'une bande d'alimentation (17) tourné à chaque fois vers l'espace (23) en tant qu'alimentation et un rouleau d'extrémité (21) d'une bande d'évacuation (20) en tant qu'évacuation étant prévus en tant que réglage de l'espace, les rouleaux d'extrémité (18, 21) pouvant être déplacés le long de la direction longitudinale des bandes (17, 20) lors du déplacement du dispositif de fermeture (30) et également pouvant être déplacés en sens contraires pour modifier ou ouvrir et fermer l'espace entre les bandes (23), **caractérisée en ce que** la bande d'alimentation (17) et la bande d'évacuation (20) présentent des dispositifs d'équilibrage (24, 25, 26) de construction similaire afin de maintenir la tension des bandes lors du déplacement des rouleaux d'extrémité susmentionnés (18, 21), le premier rouleau (19) de la bande d'alimentation (17) et le dernier rouleau (22) de la bande d'évacuation (20) restant inchangés, les dispositifs d'équilibrage (24, 25, 26) étant accouplés directement les uns aux autres pour l'ajustement fixe de l'espace entre les bandes (23), cet ajustement de l'espace entre les bandes étant indépendant de l'ouverture ou de la fermeture de l'espace entre les bandes (23), cet accouplement étant réglable en longueur pour un prolongement ou un raccourcissement de l'espace entre les bandes, qui reste également identique lors d'un déplacement horizontal du dispositif de fermeture (30) et au moins l'un des dispositifs d'équilibrage (24, 25, 26) étant connecté ou accouplé au chariot en vue d'un déplacement dans le même sens, un réglage de l'espace pour l'ouverture et la fermeture de l'espace (23) étant prévu, un accouplement forcé mécanique étant prévu entre les poinçons (31, 36) et le réglage de l'espace d'une part de telle sorte que lors du déplacement du poinçon supérieur (31) et du poinçon inférieur (36) l'un vers l'autre l'espace (23) soit ouvert davantage par l'accouplement forcé après que les poinçons (31, 36) se soient déplacés l'un vers l'autre et juste avant leur contact et d'autre part de telle sorte que l'espace (23) revienne en arrière ou se ferme du fait de l'accouplement forcé lorsque les poinçons (31, 36) s'éloignent l'un de l'autre.

2. Machine d'emballage selon la revendication 1, **caractérisée en ce qu'**au niveau du dispositif de fermeture (30), la distance du poinçon supérieur (31) et du poinçon inférieur (36) au plan des bandes ou à l'espace (23) entre elles peut être ajustée, notamment peut être ajustée simultanément ou de manière synchrone.

3. Machine d'emballage selon l'une quelconque des revendications précédentes, **caractérisée en ce que**, dans la direction d'avance (T) des objets (13), les dispositifs de soudage des côtés (62) sont d'abord prévus et ensuite le dispositif de fermeture (30).

4. Machine d'emballage selon l'une quelconque des revendications précédentes, **caractérisée en ce que** les dispositifs de soudage des côtés (62) sont réalisés pour le soudage de la couche de film supérieure (55) à la couche de film inférieure (59) sur la moitié de la hauteur de l'objet (13) ou des moyens de soudage supérieur et inférieur (66, 67) des dispositifs de soudage des côtés (62) se réunissent ou s'appliquent l'un contre l'autre à cette hauteur.

5. Machine d'emballage selon l'une quelconque des revendications précédentes, **caractérisée en ce qu'**un dispositif d'appui pour supporter les objets (13) est prévu dans la région des dispositifs de soudage des côtés (62), de préférence une mince bande périphérique, le dispositif d'appui étant notamment entraîné.

6. Machine d'emballage selon l'une quelconque des revendications précédentes, **caractérisée en ce que** derrière les dispositifs de soudage des côtés (62), est prévue une bande, en particulier une bande à vide, pour un transport exact des objets (13) vers le dispositif de fermeture (30), de préférence une bande de sortie normale (20) étant prévue derrière le dispositif de fermeture.

7. Machine d'emballage selon l'une quelconque des revendications précédentes, **caractérisée en ce que** pour l'accouplement forcé, il est prévu un dispositif d'entraînement (44) déplaçable verticalement, entraîné par le biais de l'un du dispositif de fermeture (30) ou d'un poinçon (36), qui glisse dans une coulisse (47) ou dans une rainure de forme courbe, la coulisse étant réalisée sous forme de déclencheur pour le réglage de l'espace (23) et étant connectée au réglage de l'espace en vue de son actionnement, la coulisse (47) s'étendant notamment avec deux régions (48, 50) dans la direction verticale, et les deux régions étant connectées l'une à l'autre au moyen d'un biseautage ou d'une région oblique s'étendant en biais (49) à la manière d'une courbe en S, de préférence la région oblique (49) s'étendant avec un angle de 30° à 60° par rapport à la direction verticale.

8. Machine d'emballage selon la revendication 7, **caractérisée en ce que** les deux régions s'étendant verticalement (48, 50) présentent l'une par rapport à l'autre un décalage dans la coulisse (47) ou la rainure entre les deux régions et le décalage correspond approximativement à la largeur de la coulisse (47).

9. Machine d'emballage selon la revendication 7 ou 8, **caractérisée en ce que** la coulisse (47) est disposée de manière déplaçable horizontalement par rapport au dispositif de fermeture (30) au niveau de la machine d'emballage (11) et le dispositif d'entraînement (44) est disposé de manière déplaçable verticalement au niveau du dispositif de fermeture (30), en particulier est connecté directement au poinçon inférieur (37) en vue d'un déplacement commun et vertical identique.

10. Machine d'emballage selon l'une quelconque des revendications 7 à 9, **caractérisée en ce que** l'accouplement forcé est réalisé de telle sorte que sur une certaine région de déplacement du poinçon supérieur (31) et du poinçon inférieur (37) au niveau du dispositif de fermeture (30), il ne se produise encore aucun réglage latéral de l'espace (23) mais seulement une fois qu'une région d'activation est atteinte, en particulier la région d'activation étant réalisée sous forme de la région oblique (49) selon la revendication 7 ou 8, et étant réalisée dans la coulisse (47) de telle sorte que le dispositif d'entraînement (44) entraîné par l'un des poinçons (37) n'atteigne la région d'activation que juste avant la réunion l'un sur l'autre du poinçon supérieur (31) et du poinçon inférieur (37).

11. Machine d'emballage selon l'une quelconque des revendications précédentes, **caractérisée en ce que** le poinçon supérieur (31) et le poinçon inférieur (37) sont connectés au moyen de bras (38, 39) à un levier de déclenchement (41) au niveau de régions opposées avec le centre de rotation (42) du levier de déclenchement entre elles, l'entraînement du levier de déclenchement (41) permettant de déplacer ou de soulever ou d'abaisser de manière synchronisée en sens contraires les poinçons (31, 37), de préférence sans zone morte entre eux.

12. Procédé d'emballage d'objets (13) dans un sachet en film (15) comprenant un dispositif de fermeture (30) et des dispositifs de soudage des côtés (62) pour une couche de film supérieure (55) acheminée depuis le haut et une couche de film inférieure (59) acheminée depuis le bas en vue de son soudage des côtés, de son sectionnement et de sa fermeture, une alimentation (17) et une évacuation (20) pour les objets à emballer étant prévues, lesquelles se raccordent l'une à l'autre de manière séparée par un espace (23), le dispositif de fermeture (30) étant disposé au niveau d'un chariot déplaçable horizontalement (38) au niveau de l'espace (23) et présentant un poinçon supérieur (31) au-dessus de l'espace (23) et un poinçon inférieur (37) en dessous de l'espace, le poinçon supérieur (31) et le poinçon inférieur (37) étant accouplés l'un à l'autre mécaniquement en vue d'un déplacement simultané et de sens contraires, le soudage des côtés des couches de film (55, 59) l'une à l'autre étant d'abord effectué et ensuite le sectionnement par le dispositif de fermeture (30) pour la séparation en sachets en film (15) avec l'objet (13) à l'intérieur, le dispositif de fermeture (30) étant déplacé le long de la direction de transport (T) des objets (13) pour fermer le sachet en film (14) lorsque les objets (13) avancent en continu de manière synchrone avec leur déplacement, l'espace (23) étant l'occurrence déplacé en même temps sans modifier sa largeur, un rouleau d'extrémité (18) d'une bande d'alimentation (17) tourné à chaque fois vers l'espace (23) en tant qu'alimentation et un rouleau d'extrémité (21) d'une bande d'évacuation (20) en tant qu'évacuation étant prévus en tant que réglage de l'espace, les rouleaux d'extrémité (18, 21) pouvant être déplacés le long de la direction longitudinale des bandes (17, 20) lors du déplacement du dispositif de fermeture (30) et également pouvant être déplacés en sens contraires pour modifier ou ouvrir et fermer l'espace entre les bandes (23), **caractérisé en ce que** la bande d'alimentation (17) et la bande d'évacuation (20) présentent des dispositifs d'équilibrage (24, 25, 26) de construction similaire afin de maintenir la tension des bandes lors du déplacement des rouleaux d'extrémité susmentionnés (18, 21), le premier rouleau (19) de la bande d'alimentation (17) et le dernier rouleau (22) de la bande d'évacuation (20) restant inchangés, les dispositifs d'équilibrage (24, 25, 26) étant accouplés directement les uns aux autres pour l'ajustement fixe de l'espace entre les bandes (23), cet ajustement de l'espace entre les bandes (23) étant indépendant de l'ouverture ou de la fermeture de l'espace entre les bandes, cet accouplement étant réglable en longueur pour un prolongement ou un raccourcissement de l'espace entre les bandes (23), qui reste également identique lors d'un déplacement horizontal du dispositif de fermeture (30) et au moins l'un des dispositifs d'équilibrage (24, 25, 26) étant connecté ou accouplé au chariot (38) en vue d'un déplacement dans le même sens, un réglage de l'espace pour l'ouverture et la fermeture de l'espace (23) étant prévu, un accouplement forcé mécanique étant prévu entre les poinçons (31, 36) et le réglage de l'espace d'une part de telle sorte que lors du déplacement du poinçon supérieur (31) et du poinçon inférieur (36) l'un vers l'autre l'espace (23) soit ouvert davantage par l'accouplement forcé après que les poinçons se soient déplacés l'un vers l'autre et juste avant leur contact et d'autre part de telle sorte que l'espace (23) revienne en arrière ou se ferme du fait de l'accouplement forcé lorsque les poinçons (31, 36) s'éloignent l'un de l'autre.
